# EUROPÄISCHE PATENTSCHRIFT

(11) **EP 0 719 185 B1**
(45) Veröffentlichungstag und Bekanntmachung des Hinweises auf die Patenterteilung: **09.07.1997**
(21) Anmeldenummer: 94924862.9
(22) Anmeldetag: 10.08.1994
(51) Int. Cl.: B05D 5/00, B05D 1/02

(54) **VERFAHREN ZUR HERSTELLUNG EINER MEHRSCHICHTIGEN REPARATURLACKIERUNG**
METHOD OF PRODUCING A MULTI-COAT REPAIR PAINT COATING
PROCEDE DE PRODUCTION D'UN REVETEMENT MULTICOUCHE DE PEINTURE DE REPARATION

(30) Priorität: 04.09.1993 DE 4329897
(43) Veröffentlichungstag der Anmeldung: 03.07.1996
(73) Patentinhaber: BASF Lacke + Farben AG, 48165 Münster-Hiltrup (DE)
(72) Erfinder: LIEDTKE, Hermann, D-25551 Hohenlockstedt (DE); KRAUS, Werner, D-44359 Dortmund (DE); MAYER, Bernd, D-48165 Münster (DE)
(86) Internationale Anmeldenummer: EP9402651
(87) Internationale Veröffentlichungsnummer: WO9507148

(56) Entgegenhaltungen:
- WO-A-91/14513
- US-A- 5 102 692

## Beschreibung

Gegenstand der vorliegenden Erfindung ist ein Verfahren zur Herstellung einer mehrschichtigen Reparaturlackierung, bei dem
1) die Schadstelle für das Auftragen einer Reparaturlackierung durch Reinigen, Schleifen und ggf. Aufbringen eines Spachtel- und/oder Füllermaterials und die angrenzenden, mit der Altlackierung versehenen Flächen durch eine entsprechende Vorbehandlung für das Auftragen einer Reparaturlackierung vorbereitet werden,
2) auf die vorbereitete Schadstelle sowie auf den angrenzenden, mit der Altlackierung versehenen Flächen eine Metallpigmente und/oder Effektpigmente enthaltende Basisbeschichtungszusammensetzung mittels Spritzapplikation mit einer derartigen Schichtdicke aufgebracht wird, daß die Basisschicht im Bereich der Schadstelle deckend und im angrenzenden Bereich der Altlackierung auslaufend ist,
3) aus der in Stufe (2) aufgebrachten Basisbeschichtungszusammensetzung ein Polymerfilm gebildet wird,
4) auf der so erhaltenen Basisschicht und ggf. auf der angrenzenden, nicht mit einer Basisschicht überzogenen, mit der Altlackierung versehenen Fläche eine geeignete transparente Deckbeschichtungszusammensetzung aufgebracht wird und anschließend
5) die Deckschicht zusammen mit der Basisschicht bei Temperaturen zwischen Umgebungstemperatur und 140° C, bevorzugt bei Temperaturen von unter 100° C, besonders bevorzugt bei Temperaturen von unter 80° C, getrocknet wird.

Die Ausbesserung von Schadstellen einer Lackierung erfolgt üblicherweise durch gründliches Reinigen der Schadstelle, Schleifen, ggf. Spachteln und Aufbringen eines Reparaturfüllers auf der Schadstelle. Anschließend erfolgt eine Lackierung der Schadstelle. Häufig sind allerdings bei einer derartigen Teillackierung Farbtondifferenzen zu erwarten. Insbesondere die Ausbesserung von Metalleffektlacken ist problematisch, da der Farbton und die Helligkeit des Effekts stark von der Verarbeitungsweise abhängen. Hier spielen unter anderem die Düsenweite der Spritzpistole und der Spritzdruck eine entscheidende Rolle. Auch die Art der Verdünnung und die Spritzviskosität beeinflussen Farbton und Effekt.

Wenn bei einer derartigen Teillackierung Farbtondifferenzen zu erwarten sind und keine Abgrenzung der Fläche durch Zierleisten oder Kanten gegeben ist, kann es zweckmäßig und wirtschaftlich sein, die Farbtondifferenzen durch sogenanntes auslaufendes Beispritzen in das angrenzende Teil auszugleichen.

Beim Beispritzen wird die Schadstelle deckend und in die angrenzenden Flächen hinein auslaufend, d.h. vom Schadstellenrand nach außen allmählich auf 0 µm abnehmende Schichtdicke, mit Effektlacken, wie Metallicbasislacken, mittels Spritzapplikation überlackiert. Danach wird dann die ganze Fläche bis zum Erreichen von Begrenzungen mit einem Klarlack abgedeckt. Üblicherweise wird dabei die Schadstelle deckend mit einem reduzierten Spritzpistolendruck von ca. 2 bar und die Beilackierfläche auslaufend dünn mit einem reduzierten Pistolendruck von ca. 1 bar (ausnebeln) überlackiert. Für dieses Ausbessern der Schadstelle werden üblicherweise festkörperarme konventionelle Effektlacke eingesetzt. Nach Antrocknung des so hergestellten Basislacküberzuges werden die Reparaturstelle und die angrenzenden Teile ganz mit einem Klarlack überspritzt und nach einer ggf. notwendigen Ablüftzeit gemeinsam mit den vorher aufgebrachten Schichten bei Temperaturen von vorzugsweise zwischen Umgebungstemperatur und 100° C getrocknet.

Ferner ist es üblich, wenn bei einer derartigen Teillackierung Farbtondifferenzen zu erwarten sind und keine Abgrenzung der Fläche durch Zierleisten oder Kanten gegeben ist, nach den üblichen Vorarbeiten ein stark verdünnten Klarlack vorzuspritzen. Die Schadstelle wird dann deckend mit reduziertem Spritzpistolendruck (ca. 2 bar) mit der Basisbeschichtungszusammensetzung überspritzt und dann die Beilackierfläche auslaufend dünn mit ca. 1 bar Spritzpistolendruck überlackiert (ausnebeln). Auch bei diesem Verfahren werden anschließend nach Antrocknung des so hergestellten Basislacküberzugs die Reparaturstelle und die angrenzenden Teile ganz mit einem Klarlack überspritzt und nach einer ggf. notwendigen Ablüftzeit gemeinsam mit den vorher aufgebrachten Schichten bei Temperaturen von vorzugsweise zwischen Umgebungstemperaturen und 100° C getrocknet.

Bei den vorgenannten üblichen Verfahren zur Herstellung einer Reparaturlackierung wird zum Auftrag der einzelnen Lackschichten die Spritzpistole normalerweise rechtwinkelig zur Objektoberfläche gehalten. Häufig wird die Pistole zum Ausnebeln aus dieser rechtwinkeligen Position zum Nebelbereich hingedreht, um einen feineren Übergang zu erzielen. Beim Beilackieren kritischer Farbtöne (z.B. VW mint-met. VWL-B6/00U, VW bambus-met. VWL-Y1/00Z) werden trotz dieser bekannten Verfahren häufig deutlich sichtbare Spritznebelränder beobachtet, die sich je nach Spritzdruck als hellere oder dunklere, meist unbuntere (graue) Randzonen bemerkbar machen.

Probleme treten außerdem bei der Applikation von Wasserbasislacken auf. In diesem Fall werden sehr häufig Randzonenmarkierung oder Wolkenbildung beobachtet. Aus der DE-OS-40 09 000 ist es daher bekannt, vor der Applikation des Wasserbasislacks zunächst auf die Schadstelle und die angrenzenden Bereiche der Altlackierung einen wäßrigen Klarlack aufzubringen und dann erst den wäßrigen Basislack auslaufend aufzuspritzen. Bei einigen Farbtönen (wie z.B. den o.g. Metallicfarbtönen) tritt jedoch auch bei diesem Verfahren noch die obengenannte Markierung der Spritznebelränder auf.

Der vorliegenden Erfindung lag somit die Aufgabe zugrunde, ein Verfahren zur Herstellung einer Reparaturlackierung zur Verfügung zu stellen, mit dem auch bei kritischen Farbtönen die Schadstellen an einer mehrschichtigen Metallic- bzw. Effektbeschichtung so ausgebessert werden können, daß die Reparaturstelle möglichst wenig oder gar nicht sichtbar ist, d.h. daß Farbtonveränderungen, Wolkenbildung und Randzonenmarkierung jeweils im Übergangsbereich Reparaturfüller/Altlackierung sowie Übergangsbereich Basislack/Klarlack vermieden werden. Dabei sollte dieses Verfahren sowohl für konventionelle als auch wäßrige Beschichtungszusammensetzungen anwendbar sein.

Diese Aufgabe wird überraschenderweise durch ein Verfahren der eingangs genannten Art gelöst, das dadurch gekennzeichnet ist, daß
1. die Spritzpistole beim Applizieren der Basisbeschichtungszusammensetzung auf die angrenzenden Bereiche der Altlackierung schräg in Richtung auf die Schadstelle hin geneigt ist und
2. bei der Applikation der Basisbeschichtungszusammensetzung mit einem normalen oder nur mäßig reduziertem Spritzpistoleneingangsdruck gearbeitet wird.

Überraschenderweise können mit dem erfindungsgemäßen Verfahren Schadstellen an einer mehrschichtigen Metalliclackierung so ausgebessert werden, daß die Reparaturstelle wenig oder nicht sichtbar ist. Insbesondere werden die bei den herkömmlichen Reparaturverfahren häufig beobachteten Effekte in den Randzonen vermieden. Insbesondere werden bei dem Beilackieren kritischer Farbtöne (z.B. VW mint-met. VWL-B6/00U, VW bambus-met VWL-Y1/00Z) die häufig deutlich sichtbaren Spritznebelränder, die sich je nach Spritzdruck als hellere oder dunklere, meist unbuntere (graue) Randzonen bemerkbar machen, vermieden. Von Bedeutung ist dabei, daß diese hervorragenden Ergebnisse sowohl unter Verwendung von konventionellen Reparaturmetallicbasislacken als auch unter Verwendung von wäßrigen Reparaturmetallicbasislacken erzielt werden können.

Das erfindungsgemäße Verfahren zur Herstellung einer mehrschichtigen Reparaturlackierung kann auf den unterschiedlichsten Substraten angewendet werden. Dabei ist es unerheblich, ob es sich um konventionelle oder wasserverdünnbare Aufbauten handelt, die die Schadstellen aufweisen.

Zur Durchführung des erfindungsgemäßen Verfahrens wird die Schadstelle zunächst wie üblich durch gründliches Reinigen, Schleifen, ggf. Spachteln und Füllern vorbereitet. Die jeweils erforderlichen Vorarbeiten richten sich nach Art der zu beseitigenden Schäden sowie der geforderten Qualität der Reparaturlackierung. Sie sind bekannt (vgl. z.B. Glasurit-Handbuch, Farben + Lacke, 11. Auflage, Kurt R. Vincentz Verlag, Hannover 1984, Kapitel 4, Abschnitt 7: "Pkw-Reparaturlackierung", Seite 523 ff.) und brauchen daher hier nicht näher erläutert zu werden. Für diese Vorarbeiten geeignet sind sowohl konventionelle als auch wasserverdünnbare Grundmaterialien, wie sie üblicherweise eingesetzt werden. Aus wirtschaftlichen Gründen sowie zur Verbesserung der Arbeitssicherheit (Brandschutz) und insbesondere zur Verringerung der Umweltbelastung werden zunehmend wasserverdünnbare Grundmaterialien eingesetzt.

Die überzulackierenden Bereiche der Altlackierung werden ebenfalls entsprechend zur Aufnahme einer Reparaturlackierung vorbereitet. Üblicherweise werden diese Bereiche der Altlackierung, die mit einer Reparaturlackierung überlackiert werden sollen, gründlich gereinigt, z.B. mit einem Silikonentferner, und mit Schleifpaste oder Schleifpapier angeraut. Danach wird die so vorbehandelte Fläche üblicherweise noch einmal gereinigt und entfettet. Daneben ist es aber auch möglich, diese Bereiche der Altlackierung beispielsweise mit einer Haftvermittlerlösung vorzulackieren. Diese Vorbereitung der zu beschichtenden Bereiche der Altlackierung ist aber ebenfalls bekannt und braucht daher nicht näher erläutert zu werden.

Ggf. kann anschließend auf die entsprechend vorbereitete Schadstelle sowie darüber hinaus auch auf die angrenzenden Flächen der Altlackierung ein wäßriges oder wasserverdünnbares oder auch konventionelles Überzugsmittel aufgebracht werden. Dieses Überzugsmittel wird dabei im Bereich der Schadstelle mit einer Trockenfilmschichtdicke von 2-50 µm, bevorzugt 5-20 µm, appliziert. In den angrenzenden Bereichen der Altlackierung dagegen nimmt die Trockenfilmschichtdicke dieses Überzugsmittels von der Grenze der Schadstelle nach außen hin allmählich bis auf 0 µm ab. Diese Art der Beschichtung mit abnehmender Schichtdicke wird üblicherweise als auslaufend bezeichnet. Diese Bezeichnung wird auch im folgenden zur Vereinfachung für die Applikation von Beschichtungsmitteln mit allmählich auf 0 µm abnehmender Schichtdicke verwendet. Der Bereich der angrenzenden Altlackierung, der mit diesem Überzugsmittel auslaufend beschichtet wird, hängt von vielen Faktoren, wie beispielsweise der eingesetzten Spritzpistole, dem Spritzdruck, der Art, Größe und Lage der Schadstelle u.a. ab. Üblicherweise erfolgt die auslaufende Applikation des Überzugsmittels in einem zwischen 1 cm und 1 m breiten Bereich der Altlackierung um die Schadstelle herum. Der jeweils optimale zu beschichtende Bereich der Altlackierung kann aber vom Fachmann anhand weniger Routineversuche leicht ermittelt werden.

Neben dieser Variante des auslaufenden Spritzens des Überzugsmittels ist es auch möglich, dieses Überzugsmittel auf die Schadstelle sowie den gesamten angrenzenden Bereich der Altlackierung bis zum Erreichen einer Begrenzung, wie beispielsweise einer Kante oder Leiste, mit einer Trockenfilmschichtdicke von 2-50 µm, bevorzugt 5-20 µm, aufzubringen.

Insbesondere bei den Metallicbasislacken führt dies zu einer verbesserten Farbtonangleichung an die Altlackierung. Für diesen Arbeitsgang werden üblicherweise stark verdünnte Klarlacke appliziert, die sowohl wäßrig, wasserverdünnbar als auch konventionell sein können.

Werden konventionelle Klarlacke appliziert, so muß vorgetrocknet werden, ehe der Basislack aufgebracht wird. Üblicherweise erfolgt dies durch Erwärmen der Klarlackschicht auf eine Temperatur von unter 140° C, bevorzugt von unter 80° C, während einer Zeit von 5-60 min. Werden für diesen Verfahrenschritt wäßrige Überzugsmittel eingesetzt, so kann ggf. auf einen Einbrennschritt verzichtet werden und es kann nach einer kurzen Ablüftzeit von 5 bis 50 min direkt die Basisbeschichtungszusammensetzung aufgebracht werden.

Wenn diese Schadstelle und die angrenzenden Bereiche der Altlackierung mit einem derartigen Klarlack vorgespritzt werden, so kann ggf. auf ein Anschleifen der Altlackierung verzichtet werden. Üblicherweise jedoch erfolgt die oben beschriebene Vorbehandlung der Altlackierung durch Reinigen und Anschleifen.

Für diese Vorbehandlung der Schadstelle und der Altlackierung geeignete wäßrige Klarlacke sind beispielsweise in der DE-OS-40 09 000 beschrieben. Daneben können aber auch die für diesen Zweck üblicherweise eingesetzten konventionellen Klarlacke, wie sie beispielsweise von der Fa. Glasurit GmbH vertrieben werden, eingesetzt werden.

Es ist erfindungswesentlich, daß auf die entsprechend vorbereitete Schadstelle sowie darüber hinaus auch auf die angrenzenden, mit der Altlackierung versehenen Flächen nun eine Metall- und/oder Effektpigmente enthaltende Basisbeschichtungszusammensetzung mittels einer speziellen Applikationstechnik aufgebracht wird.

Üblicherweise wird diese Basisbeschichtungszusammensetzung derart mittels Spritzen appliziert, daß die Schadstelle deckend mit einem reduzierten Spritzpistolendruck (ca. 2 bar) und die Beilackierfläche auslaufend dünn mit einem reduzierten Spritzpistolendruck (ca. 1 bar) ausgenebelt wird. Die Spritzpistolenhaltung ist dabei normalerweise rechtwinkelig zur Objektoberfläche.

Häufig wird die Pistole zum Ausnebeln aus dieser rechtwinkeligen Position zum Nebelbereich (Bereich der angrenzenden Altlackierung) hingedreht, um einen feineren Übergang zu erzielen. Diese herkömmlichen Verfahren führen jedoch insbesondere beim Beilackieren kritischer Farbtöne häufig zu sichtbaren Spritznebelrändern, die sich je nach Spritzdruck als hellere oder dunklere, meist unbuntere (graue) Randzonen bemerkbar machen. Diese sichtbaren Spritznebelränder werden durch das erfindungsgemäße Verfahren vermieden.

Bei dem erfindungsgemäßen Verfahren werden bei der ersten Variante zunächst die an die Schadstelle angrenzenden, mit der Altlackierung versehenen Flächen abgedeckt und mittels Spritzen wird dann eine Metall- und/oder Effektpigment enthaltende Basisbeschichtungszusammensetzung im Bereich der Schadstelle deckend appliziert. Dabei wird bevorzugt mit einem normalen oder nur einem leicht reduzierten Spritzpistolendurck gearbeitet. Bevorzugt liegt der Spritzpistoleneingangsdruck zwischen 3,0 und 4,5 bar. Der Spritzpistolenausgangsdruck variiert dabei je nach verwendeter Spritzpistole. Bei Verwendung einer HVLP (high volume, low pressure) Pistole liegt er beispielsweise zwischen 0,6 und 0,7 bar. Danach wird die Abdeckung entfernt und die an die Schadstelle angrenzenden, mit der Altlackierung versehenen Flächen werden mittels Spritzen auslaufend mit der Metall- und/oder Effektpigmente enthaltenden Basisbeschichtungszusammensetzung beschichtet. Auch hierbei wird bevorzugt mit einem normalen oder nur leicht reduzierten Spritzpistolendruck gearbeitet. Bevorzugt liegt auch hierbei der Spritzpistoleneingangsdruck bei Werten oberhalb von 2 bar, besonders bevorzugt zwischen 3 und 4,5 bar. Der Spritzpistolenausgangsdruck variiert wiederum je nach verwendeter Spritzpistole. Für die Applikation der Basisbeschichtungszusammensetzung sind alle üblicherweise für die Applikation von Basislacken eingesetzten Spritzpistolen geeignet, beispielsweise die o.g. HVLP-Pistolen, aber auch normale pneumatische Hochleistungsspritzpistolen (z. B. SATA JET 1,4 E).

Es ist außerdem erfindungswesentlich, daß die Spritzpistole beim Applizieren der Basisbeschichtungszusammensetzung auf diese angrenzenden Bereiche der Altlackierung schräg in Richtung auf die Schadstelle hin geneigt ist. Bevorzugt ist bei der Applikation der Basisbeschichtungszusammensetzung die Spritzpistole derart in Richtung auf die Schadstelle hin geneigt, daß die Spritzpistole mit der Oberfläche der Altlackierung ein Winkel zwischen 25 und 65°, besonders bevorzugt zwischen 30 und 60° bildet. Der Winkel ist jeweils so zu wählen, daß eine Vernebelung des Spritzstrahls möglichst vermieden wird. Der Winkel ist daher um so kleiner zu wählen, je größer die Breite des Spritzstrahls ist.

Ganz besonders bevorzugt wird die Spritzpistole während der Applikation der Basisbeschichtungszusammensetzung so gedreht, daß die Spritzpistole mit der Oberfläche der Altlackierung im Bereich der Schadstelle einen Winkel von 90 ± 60° bildet und besonders bevorzugt im wesentlichen senkrecht zur Oberfläche geführt wird. Im äußeren Bereich der mit der Altlackierung versehenen Fläche bildet die Spritzpistole dann wieder einen Winkel von 25 bis 65°, besonders bevorzugt von 30 bis 60°, bildet. Bei diesem Verfahren wird also die Spritzpistole zunächst senkrecht im Bereich der Schadstelle gehalten und dann während des Spritzvorgangs in eine schräge Position gedreht, falls von der Schadstelle nach außen hin gearbeitet wird. Entsprechend wird die Spritzpistole zunächst in einer schrägen Neigung in Richtung zur Schadstelle hin gehalten und während des Spritzvorgangs in eine rechwinkelige Position gedreht, wenn vom Bereich der Altlackierung zur Schadstelle hin gearbeitet wird.

Durch diese Kombination der beiden Verfahrensparameter, nämlich die Spritzpistole einerseits schräg in Richtung auf die Schadstelle hin zu halten und andererseits die Basisbeschichtungszusammensetzung mit normalem oder nur wenig reduziertem Druck zu applizieren, werden beim Aufbau der Basislackschicht Spritznebel vermieden, während bei den bisherigen Verfahren beim Applizieren der Basislackschicht gerade der Basislack vernebelt wird. Durch dieses erfindungsgemäße Verfahren ist gewährleistet, daß auch beim Beilackieren kritischer Farbtöne sichtbare Spritznebelränder vermieden werden.

Bevorzugt wird die Metall- und/oder Effektpigmente enthaltende Basisbeschichtungszusammensetzung in mehreren, aufeinander folgenden Spritzgängen aufgebracht. Zunächst wird dabei die Basisbeschichtungszusammensetzung im Bereich der Schadstelle deckend aufgebracht, wobei die angrenzenden Bereiche wie oben beschrieben abgedeckt werden. Die angrenzenden Bereiche der Altlackierung werden dann nach Entfernung der Abdeckung mit der Basisbeschichtungszusammensetzung beschichtet, wobei - wie oben beschrieben - mit normalem oder nur leicht reduziertem Spritzpistolendruck und schräger auf die Schadstelle hin geneigter Führung der Spritzpistole gearbeitet wird. Bevorzugt wird dabei die Basisbeschichtungszusammensetzung im Bereich der Altlackierung durch mehrere Spritzgänge aufgebracht.

Mit dem Auftrag der Basisbeschichtungszusammensetzung wird dabei bevorzugt im äußeren Bereich der Altlackierung begonnen und in Richtung auf die Schadstelle hin weiter appliziert, bis die Schadstelle selbst erreicht ist. Beim nächsten Spritzgang wird mit dem Auftrag der Basisbeschichtungszusammensetzung an einer Stelle der Altlackierung begonnen, die näher an der Schadstelle liegt als der Anfangspunkt des Basislackauftrags beim vorherigen Spritzgang. Durch diese örtlich versetzte Wiederholung der Applikation der Basisbeschichtungszusammensetzung in einem zweiten Spritzgang kann eine auslaufende Angleichung des Farbtons (Durchscheinen des Untergrundes) erzielt werden. Ggf. kann dieser Spritzgang auch noch mehrmals wiederholt werden, insbesondere wenn nur schlecht deckende Basisbeschichtungszusammensetzungen aufgebracht werden. Bevorzugt wird die Basisbeschichtungszusammensetzung in 1 bis 8, besonders bevorzugt 2 bis 4, Spritzgängen auf die an die Schadstelle angrenzenden, mit der Altlackierung versehenen Flächen appliziert.

Dabei ist es selbstverständlich auch möglich, die auslaufende Angleichung des Farbtones dadurch zu erzielen, daß beim ersten Spritzgang im Bereich der Schadstelle begonnen wird und von da ausgehend der Bereich der Altlackierung auslaufend gespritzt wird. Beim zweiten und ggf. weiteren nachfolgenden Spritzgängen wird dann jeweils weiter entfernt von der Schadstelle mit der Applikation der Basisbeschichtungszusammensetzung begonnen. Erfindungswesentlich ist stets die Führung der Spritzpistole mit der Neigung in Richtung auf die Schadstelle hin sowie die das Arbeiten mit einem normalen oder nur wenig reduzierten Spritzpistolendruck.

Ferner ist es auch möglich, zur Applikation der Basisbeschichtungszusammensetzung die an die Schadstelle angrenzenden, mit der Altlackierung versehenen Flächen nicht abzudecken, sondern direkt die Schadstelle deckend und die angrenzenden Bereiche der Altlackierung auslaufend zu beschichten (2. Variante des erfindungsgemäßen Verfahrens).

Hierbei kann wiederum im Bereich der Schadstelle oder im daran angrenzenden Bereich der Altlackierung begonnen werden. Auch sind wiederum mehrere Spritzgänge möglich. Der einzige Unterschied zwischen der 1. und 2. Variante des erfindungsgemäßen Verfahrens besteht in der Abdeckung der Schadstelle. Wegen weiterer Einzelheiten wird daher auf die obige Beschreibung der 1. Variante verwiesen. Auch bei dieser Verfahrensvariante ist es somit erfindungswesentlich, daß im Bereich der Schadstelle die Spritzpistole bevorzugt senkrecht gehalten und dann bei der Applikation der Basisbeschichtungszusammensetzung in den angrenzenden Bereichen der Altlackierung derart gedreht wird, daß sie in Richtung auf die Schadstelle hin geneigt ist. Ferner wird wieder mit normalem oder nur wenig reduziertem Spritzpistolendruck gearbeitet, wie dies bereits oben beschrieben worden ist.

Für dieses Verfahren (1. und 2. Variante) geeignet sind alle üblicherweise für die Reparaturlackierung eingesetzten Metall- und/oder Effektpigmente enthaltenden Basisbeschichtungszusammensetzungen. So sind beispielsweise auch die in der DE-OS-40 09 000 beschriebenen wäßrigen Basisbeschichtungszusammensetzungen geeignet. Geeignet sind ferner auch die unter Verwendung eines Mischsystems hergestellten Basisbeschichtungszusammensetzung, die sowohl konventionell als auch wäßrig sein können.

Beispielsweise sind die unter Verwendung des in der DE-OS-41 10 520, der nicht vorveröffentlichten Deutschen Patentanmeldung P 42 32 721.0 und der nicht vorveröffentlichten Deutschen Patentanmeldung P 42 32 717.2 beschriebenen, unter Verwendung eines Mischsystems hergestellten konventionellen und wäßrigen Basisbeschichtungszusammensetzungen geeignet.

Für die Applikation dieser Metall- und/oder Effektpigmente enthaltenden Basisbeschichtungszusammensetzungen geeignet sind die üblicherweise für Decklacke eingesetzten Spritzpistolen. Bevorzugt werden Spritzpistolen mit einer Düsenweite von 1,0 - 1,6 mm eingesetzt. Der Spritzpistoleneingangsdruck liegt bei der Applikation der Basisbeschichtungszusammensetzungen bevorzugt zwischen 3,0 und 4,5 bar. Der Spritzpistolenausgangsdruck variiert mit der jeweils verwendeten Spritzpistole.

Wie bereits ausgeführt, wird die Basisbeschichtungszusammensetzung im Bereich der mit der Altlackierung versehenen Flächen auslaufend appliziert. Das bedeutet, daß die Trockenfilmschichtdicke der Basisschicht bis auf 0 µm abnimmt. Bevorzugt nimmt dabei die Trockenfilmschichtdicke der Basisschicht in einem zwischen 1 cm und 1 m breiten Bereich der Altlackierung auf 0 µm ab. Je nach Größe und Lage der Schadstelle kann dieser Bereich der Altlackierung, der mit der Basisschicht auslaufend beschichtet wird, aber auch noch deutlich größer sein. Beispielsweise kann es durchaus zweckmäßig sein, die Basisbeschichtungszusammensetzung auslaufend bis zum Erreichen einer Begrenzung oder auch sogar bis in das angrenzende Teil hinein zu applizieren. Dies ist aber dem Fachmann geläufig und muß hier nicht näher erläutert werden.

Nach Bildung eines Polymerfilms aus der Basisbeschichtungszusammensetzung, bevorzugt nach Trocknung der Basisschicht bei Temperaturen von Umgebungstemperatur bis 140° C, bevorzugt bei Temperaturen unter 80° C, während einer Zeit von 5 bis 60 min, ggf. nach einer kurzen Abkühlzeit von im allgemeinen mindestens 5 min, wird auf der Basisschicht eine geeignete transparente Deckbeschichtungszusammensetzung aufgebracht. Falls vor der Applikation der Basisbeschichtungszusammensetzung noch ein Klarlack aufgebracht wurde und nicht der gesamte Klarlackbereich mit einer Basisschicht versehen wurde, wird auch auf diese, nicht mit der Basisschicht überzogenen Teile der Klarlackschicht die geeignete transparente Deckbeschichtungszusammensetzung aufgebracht. Bevorzugt wird die Deckbeschichtungszusammensetzung auslaufend in den unbeschichteten Bereich der Altlackierung hinein oder auf die gesamte angrenzende Altlackierung bis hin zu einer Kante, Zierleiste o.ä. deckend aufgebracht, da so zeitaufwendige Polierarbeit entfällt. Die Trockenfilmschichtdicke der Deckschicht liegt im allgemeinen zwischen 30 und 100 µm.

Als Deckbeschichtungszusammensetzung geeignet sind sowohl organisch gelöste als auch wäßrige 1- oder 2-Komponenten-Klarlacke. Häufig eingesetzt werden Klarlacke auf Basis eines hydroxylgruppenhaltigen Acrylatcopolymerisates und eines Polyisocyanates. Derartige Klarlacke sind beispielsweise in den Patentanmeldungen DE-OS-34 12 534, DE-OS-36 09 519, DE-OS-37 31 652 und DE-OS-38 23 005 beschrieben. Geeignet sind auch die in der internationalen Patentanmeldung mit der internationalen Veröffentlichungsnummer WO 88/02010 beschriebenen, feuchtigkeitshärtenden Klarlacke auf der Basis von Polyadditionspolymeren mit Alkoxi- oder Aryloxisilaneinheiten.

Nach einer ggf. erforderlichen Ablüftzeit von etwa 5 min wird dann die Deckschicht ggf. zusammen mit der Basisschicht und ggf. zusammen mit der zuvor aufgebrachten Klarlackschicht bei Temperaturen zwischen Umgebungstemperatur und 140° C, bevorzugt bei Temperaturen von unter 80° C, während einer Zeit von 5 bis 120 min getrocknet.

Die Erfindung wird nun in den nachfolgenden Beispielen näher erläutert. Alle Angaben über Teile und Prozente sind dabei Gewichtsangaben, sofern nicht ausdrücklich etwas anderes festgestellt wird. Als Substrat wird dabei eine mehrschichtige simulierte Altlackierung verwendet, wie sie in der Automobilserienlackierung üblich ist. Dabei ist es unerheblich, ob es sich um Lackaufbauten auf der Basis konventioneller oder wasserverdünnbarer Systeme handelt.

### Simulierung einer Schadstelle

Als Substrat dient ein elektrotauchgrundiertes Stahlblech, das mit einem handelsüblichen, konventionellen Füllermaterial auf Basis eines melaminvernetzten Polyesterharzes (FC 60-7133 der Fa. BASF Lacke + Farben AG, Münster; Trockenfilmschichtdicke 40 µm), einem handelsüblichen, konventionellen Metallicbasislack auf Basis Celluloseacetobutyrat (AE 54-9153 der Fa. BASF Lacke + Farben AG, Münster; Trockenfilmschichtdicke 15 µm) und einem handelsüblichen konventionellen Klarlack auf Basis isocyanatvernetzter hydroxylgruppenhaltiger Acrylate (AF 23-0185 der Fa. BASF Lacke + Farben AG, Münster; Trockenfilmschichtdicke 60 µm) versehen ist. Nach der üblichen Trocknung (60° C, 30 min) wird das beschichtete Blech zusätzlich für mehrere Stunden bei erhöhter Temperatur, z.B. 60° C, gelagert und damit die Lackierung gealtert.

Auf diesem Substrat wird eine Reparaturstelle simuliert, indem eine Durchschliffstelle bis zum Blech angefertigt wird (Durchmesser ungefähr 5 cm). Diese Durchschliffstelle wird dabei so erzeugt, daß möglichst flach auslaufende Übergänge vom Metall zum Klarlack vorhanden sind.

Auf die so erzeugte Schadstelle wird ein handelsüblicher, konventioneller Reparaturgrundfüller auf Basis isocyanatvernetzter hydroxylgruppenhaltiger Acrylate (AB 85-1122 der Fa. BASF Lacke + Farben AG, Münster; Trockenfilmschichtdicke 70 µm) aufgebracht und durch Erhitzen auf 60° C, während einer Zeit von 30 min getrocknet. Die Schadstelle und die an die Schadstelle angrenzenden Teile der Altlackierung, die beim Beispritzen ebenfalls mit Lack versehen werden sollen (ein 1 cm breiter Streifen um die Schadstelle herum), werden mit Schleifpapier so angeraut, daß glatte Übergänge zur Altlackierung erzeugt werden.

### Beispiel 1

Bei der obenbeschriebenen Schadstelle werden die angrenzenden Bereiche der Altlackierung abgedeckt (beispielsweise mit wasserfestem Abdeckpapier). Danach wird die handelsübliche Reparaturbasisbeschichtungszusammensetzung VW mint-met. VWL-B6/00U der Fa. BASF Lacke + Farben AG, Münster im Bereich der Schadstelle deckend (Trockenfilmschichtdicke 15 µm) aufgebracht. Hierbei wird mit der HVLP-Spritzpistole (high volume low pressure - Spritzpistole) SATA Jet B NR92, (Düsenweite 1,3 mm) bei einem Spritzpistoleneingangsdruck von 4,5 bar (Spritzpistolenausgangsdruck 0,7 bar) gearbeitet. Danach wird die Abdeckung entfernt und die Beispritzfläche von außen zur Schadstelle hin mit der Basisbeschichtungszusammensetzung lackiert. Auch hierbei wird mit der oben beschriebenen HVLP-Spritzpistole SATA Jet B NR92 gearbeitet. Der Spritzpistoleneingangsdruck liegt hierbei wiederum bei 4,5 bar und der Spritzpistolenausgangsdruck bei 0,7 bar. Die Spritzpistole wird beim Auftrag der Basisbeschichtungszusammenzetzung in dem Bereich der Altlackierung zunächst in einem Winkel von etwa 45° zum Objekt in Richtung zur Schadstelle hin gehalten und dann während des Spritzvorgangs in eine rechtwinkelige Position gedreht. Es wird dabei mit dem Auftrag der Basisbeschichtungszusammensetzung im äußeren Bereich der Altlackierung begonnen und zur Schadstelle hin gearbeitet. Nach Überlackieren der Schadstelle wird zum Beschichten der Altlackierung auf der anderen Seite der Schadstelle entsprechend die Spritzpistole aus der rechwinkeligen Position wieder in eine schräge Position (45° Winkel zum Objekt in Richtung zur Schadstelle hin) gedreht. Durch ggf. örtlich versetzte Wiederholung des Vorgangs in einem zweiten Spritzgang kann eine auslaufende Angleichung des Farbtones (Durchscheinen des Untergrundes) erzielt werden. Hierbei wird bevorzugt beim zweiten Spritzgang an einer Stelle der Altlackierung begonnen, die weiter in Richtung zur Schadstelle hin liegt als die Anfangsstelle beim ersten Spritzgang. Ggf. kann dieser zweite Spritzgang noch mehrmals wiederholt werden. Es ist auch möglich, mit dem ersten Spritzgang näher an der Schadstelle zu beginnen, um beim zweiten Spritzgang weiter von der Schadstelle entfernt zu beginnen.

Nach einer kurzen Ablüftzeit von 60 min wird über die gesamte Reparaturfläche und über den Bereich der aufgebrachten Basisbeschichtungszusammensetzung in den Bereich der unbeschichteten Altlackierung hinein der Klarlack auslaufend gespritzt. Es wird der handelsübliche 2-Komponenten-Klarlack auf Basis isocyanatvernetzter hydroxylgruppenhaltiger Acrylate (AF 23-0185 + SC 29-0173 + SV 41-0391 der Fa. BASF Lacke + Farben AG, Münster; Mischungsverhältnis 2:1:0,6) eingesetzt. Durch die Applikation des Klarlacks über den Bereich der Basisschicht hinaus in die angrenzenden Teile wird eine Beschichtung mit einer gleichmäßigen Oberflächenstruktur erhalten, so daß eine aufwendige Polierarbeit an der Schadstelle nicht mehr erforderlich ist. Der Klarlack wird dabei im Bereich der Schadstelle mit einer Trockenfilmschichtdicke von 60 µm aufgetragen. Nach einer kurzen Ablüftzeit von 5 min wird abschließend die Deckschicht bei 60° C 30 min getrocknet.

Im Gegensatz zum bisherigen Verfahren wird der Angleich nicht durch Nebeln mit reduziertem Druck, sondern unter Vermeidung von Spritznebel beim Aufbau der Basislackschicht erzielt.

### Beispiel 2

Die obenbeschriebene Schadstelle wird von außen zur Schadstelle hin mit normalem Spritzpistoleneingangsdruck (4,5 bar) und einem Spritzpistolenausgangsdruck von 0,7 bar mit der oben beschriebenen Spritzpistole SATA Jet B NR92 und der in Beispiel 1 beschriebenen handelsüblichen Reparaturbasisbeschichtungszusammensetzung VW mint-met VWL-B6/00U lackiert.

Die Schadstelle selbst wird mit dieser Spritzpistole mit der Basisbeschichtungszusammensetzung deckend mit normalem Spritzpistoleneingangsdruck (4,5 bar) lackiert. Auch in diesem Fall wird die Spritzpistole zunächst in einem ca. 45° Winkel zum Objekt in Richtung zur Schadstelle hingeneigt gehalten und dann während des Spritzvorgangs in eine rechtwinkelige Position gedreht, wobei diese rechtwinkelige Position im Bereich der Schadstelle erreicht ist. Durch ggf. örtlich versetzte Wiederholung des Vorgangs in einem zweiten und ggf. dritten oder vierten Spritzgang kann eine auslaufende Angleichung des Farbtones erzielt werden.

Auch hierbei ist es möglich, daß der erste Spritzgang näher an der Schadstelle liegt als der zweite und die ggf. weiteren Spritzgänge. Nach einer kurzen Ablüftzeit von 60 min wird über die gesamte Reparaturfläche und über den Bereich der aufgebrachten Basisbeschichtungszusammensetzung in den Bereich der unbeschichteten Altlackierung hinein der Klarlack auslaufend gespritzt. Es wird der handelsübliche 2-Komponenten-Klarlack auf Basis isocyanatvernetzter hydroxylgruppenhaltiger Acrylate (AF 23-0185 + SC 29-0173 + SV 41-0391 der Fa. BASF Lacke + Farben AG, Münster; Mischungsverhältnis 2:1:0,6) eingesetzt. Durch die Applikation des Klarlacks über den Bereich der Basisschicht hinaus in die angrenzenden Teile mit einer gleichmäßigen Oberflächenstruktur erhalten, so daß eine aufwendige Polierarbeit an der Schadstelle nicht mehr erforderlich ist. Der Klarlack wird dabei im Bereich der Schadstelle mit einer Trockenfilmschichtdicke von 60 µm aufgetragen. Nach einer kurzen Ablüftzeit von 5 min wird abschließend die Deckschicht bei 60° C 30 min getrocknet.

Dieses Beispiel 2 unterscheidet sich somit von dem Beispiel 1 nur dadurch, daß die Schadstelle gleichzeitig mit dem Beschichten der mit der Altlackierung versehenen Flächen erfolgt und nicht in einem separaten Arbeitsgang. Auch bei diesem Verfahren werden bei kritischen Farbtönen keine Spritznebelränder beobachtet.

### Beispiele 3 und 4

Die Beispiele 1 und 2 werden wiederholt mit dem einzigen Unterschied, daß nun als Basisbeschichtungszusammensetzung die handelsübliche Basisbeschichtungszusammensetzung VW bambus-met. VWL-Y1/00Z eingesetzt wird.

### Vergleichsbeispiel

Es wird analog zu den Beispielen 1-4 gearbeitet, mit dem einzigen Unterschied, daß die Basisbeschichtungszusammensetzung im Bereich der Schadstelle mit einem reduzierten Druck (Spritzpistoleneingangsdruck von ca. 2 bar und Spritzpistolenausgangsdruck 0,4 bar) und die Beilackierfläche mit einem reduzierten Spritzpistoleneingangsdruck von 1 bar und einem Spritzpistolenausgangsdruck von < 0,4 bar appliziert wird. Außerdem ist die Spritzpistolenhaltung rechtwinkelig im Bereich der Schadstelle und in der Nähe der Schadstelle und die Pistole wird zum Ausnebeln aus dieser rechtwinkeligen Position zum Nebelbereich (Bereich der Altlackierung) hingedreht, um einen feineren Übergang zu erzielen. Sowohl beim Reparaturbasislack VW mint-met. VWL-B6/00U als auch beim Reparaturbasislack VW bambus-met. VWL-Y1/00Z werden deutlich sichtbare Spritznebelränder beobachtet, die sich als dunklere, unbuntere (graue) Randzone bemerkbar machen.

## Patentansprüche

1. Verfahren zur Herstellung einer mehrschichtigen Reparaturlackierung, bei dem
1.) die Schadstelle für das Auftragen einer Reparaturlackierung durch Reinigen, Schleifen und ggf. Aufbringen eines Spachtel- und/oder Füllermaterials und die angrenzenden, mit der Altlackierung versehenen Flächen durch eine entsprechende Vorbehandlung für das Auftragen einer Reparaturlackierung vorbereitet werden,
2.) auf die vorbereitete Schadstelle sowie auf den angrenzenden, mit der Altlackierung versehenen Flächen eine Metall- und/oder Effektpigmente enthaltende Basisbeschichtungszusammensetzung mittels Spritzapplikation mit einer derartigen Schichtdicke aufgebracht wird, daß die Basisschicht im Bereich der Schadstelle deckend und im angrenzenden Bereich der Altlackierung auslaufend ist,
3.) aus der in Stufe (2) aufgebrachten Basisbeschichtungszusammensetzung ein Polymerfilm gebildet wird,
4.) auf der so erhaltenen Basisschicht und ggf. auf den angrenzenden, nicht mit einer Basisschicht überzogenen Teilen der Altlackierung eine geeignete transparente Deckbeschichtungszusammensetzung aufgebracht wird und anschließend
5.) die Deckschicht zusammen mit der Basisschicht bei Temperaturen zwischen Umgebungstemperatur und 140° C, bevorzugt bei Temperaturen von unter 100° C und besonders bevorzugt bei Temperaturen von unter 80° C, getrocknet wird,
dadurch gezeichnet, daß
1.) die Spritzpistole beim Applizieren der Basisbeschichtungszusammensetzung auf die an die Schadstelle angrenzenden Bereiche der Altlackierung schräg in Richtung auf die Schadstelle hin geneigt ist und
2.) bei der Applikation der Basisbeschichtungszusammensetzung mit einem normalen oder nur mäßig reduzierten Spritzpistoleneingangsdruck gearbeitet wird.

2. Verfahren nach Anspruch 1, dadurch gekennzeichnet, daß die Spritzpistole bei der Applikation der Basisbeschichtungszusammensetzung auf die an die Schadstelle angrenzenden Bereiche der Altlackierung derart in Richtung auf die Schadstelle hin geneigt ist, daß die Spritzpistole mit der Oberfläche der Altlackierung einen Winkel zwischen 25 und 65°, bevorzugt zwischen 30 und 60°, bildet.

3. Verfahren nach Anspruch 1 oder 2, dadurch gekennzeichnet, daß die Spritzpistole während der Applikation der Basisbeschichtungszusammensetzung so gedreht wird, daß die Spritzpistole mit der Oberfläche der zu beschichtenden Fläche im Bereich der Schadstelle einen Winkel von 90 ± 60° und im äußeren Bereich der mit der Altlackierung versehenen Fläche einen Winkel von 25 bis 65°, bevorzugt 30 bis 60°, bildet.

4. Verfahren nach einem der Ansprüche 1 bis 3, dadurch gekennzeichnet, daß die Basisbeschichtungszusammensetzung derart aufgebracht wird, daß die an die Schadstelle angrenzenden, mit der Altlackierung versehenen Flächen zunächst abgedeckt werden und mittels Spritzen eine Basisbeschichtungszusammensetzung deckend appliziert wird und dann nach Entfernen der Abdeckung die an die Schadstelle angrenzenden, mit der Altlackierung versehenen Flächen mittels Spritzen auslaufend mit der Basisbeschichtungszusammensetzung beschichtet werden.

5. Verfahren nach einem der Ansprüche 1 bis 4, dadurch gekennzeichnet, daß die an die Schadstelle angrenzenden, mit der Altlackierung versehenen Flächen auslaufend mit der Basisbeschichtungszusammensetzung beschichtet werden, indem
a) die Basisbeschichtungszusammensetzung in mehreren aufeinander folgenden Spritzgängen aufgebracht wird,
b) mit dem Auftrag der Basisbeschichtungszusammensetzung im äußeren Bereich der Altlackierung begonnen und in Richtung auf die Schadstelle hin weiter appliziert wird, bis die Schadstelle selbst erreicht ist,
c) bei dem nächsten Spritzgang mit dem Auftrag der Basisbeschichtungszusammensetzung an einer Stelle der Altlackierung begonnen wird, die näher an der Schadstelle liegt als der Anfangspunkt des Auftrags beim vorherigen Spritzgang und ggf.
d) der Verfahrensschritt (c) ein- oder mehrmals wiederholt wird.

6. Verfahren nach einem der Ansprüche 1 bis 5, dadurch gekennzeichnet, daß die Basisbeschichtungszusammensetzung in 1 bis 8, bevorzugt 2 bis 4, Spritzgängen auf die an die Schadstelle angrenzenden, mit der Altlackierung versehenen Flächen appliziert wird.

7. Verfahren nach einem der Ansprüche 1 bis 6, dadurch gekennzeichnet, daß bei der Applikation der Basisbeschichtungszusammensetzung mit einem Spritzpistoleneingangsdruck von 3,0 bis 4,5 bar und/oder einer Spritzpistole mit einer Düsenweite von 1,0 bis 1,6 mm gearbeitet wird.

8. Verfahren nach einem der Ansprüche 1 bis 7, dadurch gekennzeichnet, daß die Trockenfilmschichtdicke der Basisschicht in einem zwischen 1 cm und 1 m breiten Bereich der Altlackierung auf eine Trockenfilmschichtdicke von 0 µm abnimmt.

9. Verfahren nach einem der Ansprüche 1 bis 8, dadurch gekennzeichnet, daß die transparente Deckbeschichtungszusammensetzung über die mit der Basisbeschichtungszusammensetzung beschichteten Bereiche der mit einer Altlackierung versehenen Fläche hinaus bis zum Erreichen einer Begrenzung der Altlackierung aufgebracht wird.

10. Verfahren nach einem der Ansprüche 1 bis 9, dadurch gekennzeichnet, daß die transparente Deckbeschichtungszusammensetzung in der Stufe (4) im angrenzenden Bereich der Altlackierung auslaufend aufgebracht wird.

11. Verfahren nach einem der Ansprüche 1 bis 10, dadurch gekennzeichnet, daß vor der Applikation der Basisbeschichtungszusammensetzung auf die vorbereitete Schadstelle sowie auf den angrenzenden, mit der Altlackierung versehenen Flächen ein Metall- und Effektpigment freies Überzugsmittel aufgebracht wird.

## Claims

1. Process for the production of a multicoat refinish, in which
1.) the damage site is prepared for the application of a refinish, by cleaning, sanding and, if desired, application of a knifing filler and/or filler material, and the adjacent areas, bearing the old finish, are prepared for the application of a refinish, by an appropriate pretreatment,
2.) a basecoat composition containing metallic pigments and/or special-effect pigments is applied by spraying to the prepared damage site and to the adjacent areas bearing the old finish, with a coat thickness such that the basecoat is opaque in the region of the damage site and gradually runs out in the adjacent region of the old finish,
3.) a polymer film is formed from the basecoat composition applied in step (2),
4.) an appropriate, transparent topcoat composition is applied to the resulting basecoat and, if desired, to the adjacent sections, not coated with a basecoat, of the old finish, and subsequently
5.) the topcoat is dried together with the basecoat at temperatures between ambient temperature and 140°C, preferably at temperatures below 100°C and particularly preferably at temperatures below 80°C,
drawn [sic] in that
1.) during the application of the basecoat composition to the regions of the old finish adjacent to the damage site, the spraygun is inclined diagonally to the damage site, and
2.) during the application of the basecoat composition, a normal or only slightly reduced spraygun input pressure is used.

2. Process according to Claim 1, characterized in that, during the application of the basecoat composition to the regions of the old finish adjacent to the damage site, the spraygun is inclined towards the damage site such that the spraygun forms an angle of between 25 and 65°, preferably between 30 and 60°, with the surface of the old finish.

3. Process according to Claim 1 or 2, characterized in that, during the application of the basecoat composition, the spraygun is rotated such that the spraygun forms an angle of 90 ± 60° with the surface of the area to be coated in the region of the damage site and, in the outer region of the area bearing the old finish, forms an angle of from 25 to 65°, preferably from 30 to 60°.

4. Process according to one of Claims 1 to 3, characterized in that the basecoat composition is applied such that the areas adjacent to the damage site, bearing the old finish, are first masked off and a basecoat composition is applied opaquely by spraying, and then, after removing the masking, the areas adjacent to the damage site, bearing the old finish, are coated by spraying with the basecoat composition, such that the basecoat gradually runs out.

5. Process according to one of Claims 1 to 4, characterized in that the areas adjacent to the damage site, bearing the old finish, are coated with the basecoat composition such that the coat gradually runs out, by
a) applying the basecoat composition in two or more successive spray passes,
b) beginning the application of the basecoat composition in the outer region of the old finish and continuing application towards the damage site until the damage site itself is reached,
c) in the next spray pass, beginning the application of the basecoat composition at a site in the old finish which is closer to the damage site than the starting point at which application was begun in the previous spray pass and, if desired
d) repeating process step (c) one or more times.

6. Process according to one of Claims 1 to 5, characterized in that the basecoat composition is applied in from 1 to 8, preferably from 2 to 4, spray passes to the areas adjacent to the damage site, bearing the old finish.

7. Process according to one of Claims 1 to 6, characterized in that, during the application of the basecoat composition, a spraygun input pressure of 3.0 to 4.5 bar and/or a spraygun with a nozzle width of 1.0 to 1.6 mm is used.

8. Process according to one of Claims 1 to 7, characterized in that the dry film thickness of the basecoat decreases to a dry film thickness of 0 µm in a region of the old finish which is between 1 cm and 1 m wide.

9. Process according to one of Claims 1 to 8, characterized in that the transparent topcoat composition is applied over the regions of the area bearing an old finish which have been coated with the basecoat composition, until a delimitation of the old finish is reached.

10. Process according to one of Claims 1 to 9, characterized in that the transparent topcoat composition is applied in step (4) in the adjacent region of the old finish such that it gradually runs out.

11. Process according to one of Claims 1 to 10, characterized in that a coating composition which is free of metallic and special-effect pigment is applied, prior to the application of the basecoat composition, to the prepared damage site and to the adjacent areas which bear the old finish.

## Revendications

1. Procédé de production d'un revêtement de peinture de réparation multicouche dans duquel
1.) l'on apprête la zone endommagée pour l'application d'un revêtement de peinture de réparation par un nettoyage, un polissage et, le cas échéant, une application d'un matériau de masticage et/ou d'un pigment charge, et les surfaces limitrophes, pourvues de l'ancien revêtement de peinture par un traitement préalable correspondant pour l'application d'un revêtement de peinture de réparation,
2.) l'on applique, sur la zone endommagée apprêtée, ainsi que sur les surfaces limitrophes, pourvues de l'ancien revêtement de peinture une composition de revêtement de base contenant des pigments métalliques et/ou des pigments à effet, grâce à une application par pulvérisation à une épaisseur de couche telle que la couche de base soit couvrante dans le domaine de la zone endommagée et aille en diminuant dans le domaine limitrophe de l'ancien revêtement de peinture.
3.) l'on forme, à partir de la composition de revêtement de base appliquée dans l'étape (2), un film polymère,
4.) l'on applique sur la couche de base ainsi obtenue, et, le cas échéant, sur les parties limitrophes, non revêtues d'une couche de base, de l'ancien revêtement de peinture, une composition de revêtement de finition transparente appropriée et
5.) l'on procède ensuite au séchage de la couche de finition, conjointement à la couche de base, à des températures comprises entre la température ambiante et 140°C, de préférence à des températures en-dessous de 100°C, et en particulier de préférence à des températures en-dessous de 80°C,
caractérisé en ce que
1.) le pistolet de pulvérisation, lors de l'application de la composition de revêtement de base sur les domaines limitrophes à la zone endommagée de l'ancien revêtement de peinture est incliné obliquement en direction de la zone endommagée et
2.) en ce que l'on travaille, lors de l'application de la composition de revêtement de base, à une pression d'entrée du pistolet de pulvérisation normale ou seulement moyennement réduite.

2. Procédé selon la revendication 1, caractérisé en ce que le pistolet de pulvérisation, lors de l'application de la composition de revêtement de base sur les domaines limitrophes à la zone endommagée de l'ancien revêtement de peinture est incliné en direction de la zone endommagée de sorte que le pistolet de pulvérisation forme avec la surface de l'ancien revêtement de peinture un angle compris entre 25 et 65°, de préférence entre 30 et 60°.

3. Procédé selon la revendication 1 ou 2, caractérisé en ce que l'on tourne le pistolet de pulvérisation pendant l'application de la composition de revêtement de base de sorte que le pistolet de pulvérisation forme avec le plan de la surface à revêtir dans le domaine de la zone endommagée un angle de 90 ± 60° et dans le domaine externe de la surface pourvue de l'ancien revêtement de peinture un angle de 25 à 65°, de préférence de 30 à 60°.

4. Procédé selon l'une quelconque des revendications 1 à 3, caractérisé en se que la composition de revêtement de base est appliquée de telle sorte que l'on recouvre tout d'abord les surfaces pourvues de l'ancien revêtement de peinture, limitrophes de la zone endommagée, et que l'on applique de manière couvrante par pulvérisation une composition de revêtement de base, et en ce que l'on procède alors, après retrait de la protection de recouvrement, par pulvérisation d'une manière allant en diminuant, au revêtement des surfaces pourvues de l'ancien revêtement de peinture, limitrophes de la zone endommagée, à l'aide de la composition de revêtement de base.

5. Procédé selon l'une quelconque des revendications 1 à 4, caractérisé en ce que l'on procède au revêtement des surfaces pourvues de l'ancien revêtement de peinture, limitrophes de la zone endommagée à l'aide de la composition de revêtement de base, d'une manière allant en diminuant,
a) en appliquant la composition de revêtement de base au cours de plusieurs passages de pulvérisation se suivant les uns les autres,
b) en commençant avec l'application de la composition de revêtement de base dans le domaine externe de l'ancien revêtement de peinture et en continuant l'application en direction de la zone endommagée, jusqu'à atteindre la zone endommagée proprement dite,
c) en commençant, lors du prochain passage de pulvérisation, avec l'application de la composition de revêtement de base à un point de l'ancien revêtement de peinture qui se situe plus près de la zone endommagée que le point de départ de l'application lors du passage de pulvérisation précédent, et, le cas échéant,
d) en répétant l'étape de procédé (c) une ou plusieurs fois.

6. Procédé selon l'une quelconque des revendications 1 à 5, caractérisé en ce que la composition de revêtement de base est appliquée sur les surfaces pourvues de l'ancien revêtement de peinture, limitrophes de la zone endommagée en 1 à 8, de préférence 2 à 4 passages de pulvérisation.

7. Procédé selon l'une quelconque des revendications 1 à 6, caractérisé en ce que l'on travaille, lors de l'application de la composition de revêtement de base à une pression d'entrée du pistolet de pulvérisation de 3,0 à 4,5 bar et/ou à l'aide d un pistolet de pulvérisation ayant une largeur de buse de 1,0 à 1,6 mm.

8. Procédé selon l'une quelconque des revendications 1 à 7, caractérisé en ce que l'épaisseur de couche de film sec de la couche de base diminue dans un domaine de largeur comprise entre 1 cm et 1 m de l'ancien revêtement de peinture à une épaisseur de couche de film sec de 0 µm.

9. Procédé selon l'une quelconque des revendications 1 à 8, caractérisé en ce que la composition de revêtement de finition transparente est appliquée sur les domaines revêtus à l'aide de la composition de revêtement de base, des surfaces pourvues d'un ancien revêtement de peinture, jusqu'à atteindre une limite d'un ancien revêtement de peinture.

10. Procédé selon l'une quelconque des revendications 1 à 9, caractérisé en ce que la composition de revêtement de finition transparente est appliquée dans l'étape (4) d'une manière allant en diminuant dans le domaine de l'ancien revêtement de peinture.

11. Procédé selon l'une quelconque des revendications 1 à 10, caractérisé en ce que qu'avant l'application de la composition de revêtement de base sur la zone endommagée apprêtée ainsi que sur les surfaces limitrophes, pourvues de l'ancien revêtement de peinture, l'on applique un agent de revêtement exempt de pigments métallique et de pigment à effet.
